# EUROPEAN PATENT APPLICATION

(11) **EP 3 257 886 A1**
(43) Date of publication of application: **20.12.2017**
(21) Application number: 16175029.4
(22) Date of filing: 17.06.2016
(51) Int. Cl.: C08G 63/183, C08J 5/18, C08G 63/85, D01F 6/62, B29C 49/00

(54) **PROCESS FOR PRODUCTION OF PET, AND PRODUCTS THEREOF**

(71) Applicant: Sasa Polyester Sanayi A.S., 01355 Seyhan Adana (TR)
(72) Inventor: BAGCIVAN, Bülent, 01355 Seyhan ADANA (TR); KALPAKLI, Esin, 01355 Seyhan DANA (TR); KAYA, Güven, 01355 Seyhan ADANA (TR)
(74) Representative: Awapatent AB

(57) **Abstract**

The present invention relates to a process for production of polyethylene terephthalate comprising the steps of, providing a terephthalic acid monomer, providing ethylene glycol; providing a titanium based catalyst; esterification of a mixture of the monomer, ethylene glycol and titanium based catalyst in at least two steps, wherein the esterification temperature is in a range of 250°C to 280°C and increased, within the range, in each subsequent step; polymerisation at a temperature in a range of 260°C to 290°C in at least two steps and is increased or kept constant, within the range, in each subsequent step to obtain the polyethylene terephthalate.

## Description

### Field of invention

The present invention relates to a process for production of polyethylene terephthalate. The invention further relates to products obtainable from the process. Yet further, the invention relates to polyethylene terephthalate chips.

### Technical background

Polyethylene terephthalate, or PET, is a widely used thermoplastic polymer. PET has been known since before the middle of the last century. PET is known to be used for fibres, containers, and films.

The production of PET commonly involves reacting ethylene glycol and dimethyl terephthalate or terephthalic acid. Used catalysts frequently contain heavy and/or toxic metals, or example Antimony, zinc or Germanium. After manufacturing of the PET metal from the catalyst remain in the product, which is a problem due to a toxicity of the metals, which is of particular relevance with PET containers intended for use with food stuff, such as bottles, and other products in contact with humans, such as clothes made from PET yarn. Antimony may be removed from the PET by washing, which adds to process complexity and cost of the product.

Different end uses for the PET require different characteristics of the PET. PET to be used for fibre, film, or bottle production must have specific properties including a minimum intrinsic viscosity, and the specific properties are difficult to achieve, particularly in large scale production.

Thus, there is a need for efficient large scale production of PET with minimized content of toxic metals, which PET is suitable for fibre, film or bottle production.

### Summary of invention

A purpose of the present invention is to provide production of polyethylene terephthalate without one or more disadvantages of prior art.

Another purpose of the present invention is to provide efficient production of polyethylene terephthalate with minimised levels of heavy and/or toxic metals.

Yet another purpose of the present invention is to provide efficient production of polyethylene terephthalate with minimised levels of antimony and/or zinc.

Yet another purpose of the present invention is to provide efficient production of polyethylene terephthalate with minimised levels of antimony and/or zinc suitable for fiber, film, and bottle production.

It is a further object of the present invention to provide such production of polyethylene terephthalate in large scale.

These and other objects of the invention are at least partly met by the invention as defined in the independent claims. Preferred embodiments are set out in the dependent claims.

According to a first aspect, there is provided a process for production of polyethylene terephthalate comprising the steps of, providing a terephthalic acid monomer, providing ethylene glycol; providing a titanium based catalyst; esterification of a mixture of the monomer, ethylene glycol and titanium based catalyst in at least two steps, wherein the esterification temperature is in a range of 250°C to 280°C and increased, within the range, in each subsequent step; polymerisation at a temperature in a range of 260°C to 290°C in at least two steps and is increased or kept constant, within the range, in each subsequent step to obtain the polyethylene terephthalate.

Such a process provides for efficient production of polyethylene terephthalate (PET), without toxic metals, and suitable for production of fibre, film, and bottle grade PET, and products including, for example, PET fibres, PET films, and PET bottles.

Terephthalic acid monomer is a suitable starting material for the process.

A titanium based catalyst is efficient for the polyethylene terephthalate (PET) production. Further, the titanium based catalyst makes it possible to produce PET without zinc or antimony, and thus efficient production of zinc and antimony free PET.

The temperature ranges provides for efficient PET production, with desired quality and properties of the PET.

The titanium based catalyst may comprise titanates. The titanium based catalyst may comprise compounds selected from the group Ti(OR)₄, wherein R is an organic compound; organic acid alkaline metal titanum salts, and titanium alkylphosphate complexes; and any combination thereof. Examples of compounds that may be used include tetra-n-propyl titanate, tetraisopropyl titanate, tetra-n-butyl titanate, tetraphenyl titanate, tetracyclohexyl titanate, tetrabenzyl titanate, tetra-n-butyl titanate tetramer, titanium acetate, titanium oxalates, sodium or potassium titanium salts, sodium or potassium titanates, titanium halides, titanate hexafluorides of potassium, manganese and ammonium, titanium acetylacetate, titanium alkoxides, titanate phosphites, titanium alkyl phosphate, and titanium phospate, and any combination thereof. Examples of suitable catalysts are titanium alkylphosphate complexes, e.g. titanium buthyl phosphate complex; organic acid sodium titanium salts and/or organic acid potassium titanium salts, e.g. citric acid sodium titanium salt.

Tyzor^{®} Activate™ 436, and 422, and Tyzor^{®} IAM are examples of usable catalysts.

When the titanium based catalyst comprises Ti(OR)₄, R may be alkyl, such as butyl, or an organic acid.

The titanium based catalyst may comprise titanium citrate.

The terephthalic acid may be purified terephthalic acid.

The esterification temperature in a first step may be in a range of 255°C to 270°C, preferably 257°C to 267°C and in a second step may be in a range of 259°C to 280°C, preferably 265°C to 275°C.

Such temperature ranges provides for efficient PET production, with desired quality and properties of the PET.

The polymerization temperature in a first step may be in a range of 265°C to 280°C, and in a second step may be in a range of 275°C to 285°C.

Such temperature ranges provides for efficient PET production, with desired quality and properties of the PET

The process may comprise polymerization in a third step at a temperature in a range of 280°C to 285°C.

Thus, efficient finishing is obtained.

The esterification in the first step may be performed during a retention time of 180 to 300 minutes, and the esterification in the second step may be performed during a retention time of 80 to 110 minutes.

Such retention times provides for efficient PET production, with desired quality and properties of the PET.

The polymerisation in the first step may be performed during a retention time of 60 to 90 minutes, and the polymerisation in the second step may be performed during a retention time of 60 to 90 minutes, and, optionally, the polymerisation in the third step may be performed during a retention time of 60 to 90 minutes.

Such retention times provides for efficient PET production, with desired quality and properties of the PET.

The process may further comprise addition of additives chosen from the group colouring agents, fillers, dulling agents, stabilizers, anti-crystallisation agents, pinning agents. Examples of fillers may be selected from calcium carbonate, and barium sulphate. Examples of dulling agents may be selected from barium sulphate, and titanium dioxide. Examples of stabilizers may be selected from phosphorous containing compounds, such as phosphoric acid, polyphosphoric acid and phosphates. Examples of anticrystallization agents may be selected from isophtalic acid, diethylene glycol, cyclohexanedicarboxylic acid (CHDA), and cyclohexanedimethanol (CHDM). Also, any combination of the mentioned compounds may be provided.

Alkali metals, such as, for example, lithium and/or sodium, and/or earth alkaline metals, such as, for example, magnesium may be added to provide conductivity management.

Diethylene glycol may be added before or during the polymerisation.

Diethylene glycol may be added before the polymerisation, and after the esterification.

Addition of diethylene glycol provides for, for example, efficient control of the crystallinity of the end product for bottle grade PET, and dye take-up for textile end products.

IPA, CHDA, CHDM may be added to first step of esterification. Thus, crystallinity and transparency may be controlled to provide film, or bottle grade PET.

The process may further comprise manufacturing of polyethylene terephthalate chips or fibres comprising the polyethylene terephthalate obtained from the polymerisation.

The polyethylene terephthalate chips may be of film grade, of bottle grade, or of fibre grade.

Thus, suitable and desirable properties of the PET may be obtained.

The process may further comprise addition of ethylene glycol to an esterification step.

Thus, efficient esterification is obtained.

The process may further comprise an ethylene glycol separation step, wherein a gaseous stream from at least one of the esterification steps is subjected to a distillation to recover ethylene glycol.

Thus, efficient PET production is obtained.

The recovered ethylene glycol may be recycled to an esterification step.

The recovered ethylene glycol may be recycled via a filtering media in which activated carbon is present. The filtration using said filtering media may be performed before recyling the recovered ethylene glycol to an esterification step.

Thus, efficient use of the ethylene glycol is obtained with minimised losses of chemicals, providing for efficient PET production.

The esterification temperature in a first step may be in a range of 260°C to 264°C, and in a second step in a range of 267°C to 271°C,
the polymerization temperature in a first step may be in a range of 271 °C to 275°C, and in a second step in a range of 279°C to 283°C, and
optionally, the polymerisation in a third step may be at a temperature in a range of 282°C to 284°C.

According to a second aspect, there is provided a polyethylene terephthalate chip characterised by having an intrinsic viscosity of at least 0.6, preferably 0.6-0.8, and a content of -COOH of 50 or below eq/ton.

The polyethylene terephthalate chip may have an intrinsic viscosity of 0.6 to 0.66, a content of COOH of 40 mol/ton, or below, a glass transition temperature of 70-80°C, and optionally a SMR of 5-80 x 10⁷ OHMS.cm. Such PET chips may be characterised by being of film grade.

The polyethylene terephthalate chip may have an intrinsic viscosity of 0.6 to 0.64, a content of -COOH of 30-50 eq/ton, a glass transition temperature of 70-85°C. Such PET chips may be characterised by being of bottle grade after an SSP process.

The polyethylene terephthalate chip may have an intrinsic viscosity of 0.64 to 0.75, a glass transition temperature of 70-80°C, and optionally a TiO₂ content of 0-2%, and a DEG content of 0.5-1.5%. Such PET chips may be characterised by being of textile or fibre grade.

According to a third aspect, there is provided a polyethylene terephthalate product obtainable according to the process according to the first step.

According to a fourth aspect, there is provided a film comprising the polyethylene terephthalate product according to the second aspect.

Further features of, and advantages with, the present invention will become apparent when studying the appended claims and the following description. The skilled person will realise that different features of the present invention may be combined to create embodiments other than those described in the following, without departing from the scope of the present invention.

According to an additional alternative aspect, there is provided a a process for production of polyethylene terephthalate comprising the steps of, providing a dimethyl terephthalate monomer; providing ethylene glycol; providing a titanium based catalyst; esterification of a mixture of the monomer, ethylene glycol and titanium based catalyst in at least one step, wherein the esterification temperature is in a range of 220°C to 255°C, preferably 230°C to 245°C, such as 235°C to 245°C; polymerisation at a temperature in a range of 275°C to 295°C in at least one step, and optionally finishing polymerisation at 285°C to 295°C, to obtain the polyethylene terephthalate.

The titanium based catalyst may be added after a step of esterification and before the polymerisation.

### Brief description of figures

Fig.1 is a schematic illustration of a process for production of polyethylene terephthalate according to an embodiment.
Fig.2 is a schematic illustration of a process for production of polyethylene terephthalate according to an embodiment.
Fig.3 is a schematic illustration of a process for production of polyethylene terephthalate according to an embodiment.

### Definitions

As used herein, PET refers to polyethylene terephthalate,

As used herein IV refers to intrinsic viscosity.

### Detailed description

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The present invention makes it possible to efficiently produce polyethylene terephthalate, or PET, and allows for production of PET with desirable properties. It will be appreciated that PET suitable for fibre, film and bottle production may be realised. It is an advantage with the process, that PET free of zinc and antimony, or any heavy or toxic metals, is obtained.

As used herein, PET of textile or fiber grade, film grade, and bottle grade intend to describe PET, which can be described as having an intrinsic viscosity within the range of 0.64-0.75, 0.6-0.66, and 0.57-0.64, respectively. In order to suit the use of the PET of the different grades, it is desirable that the PET have specifications according to table 1.

**Table 1: Examples of specifications of PET of different grades.**

| **PET grade** | **IV** | **COOH** | **Glass transition temperature, Tg** | **SMR** |
|---|---|---|---|---|
| **Unit** | | eq/ton | °C | OHMS.cm |
| **Film** | 0.6-0.66 | <40 | 70-80 | 5-80 x 10⁷ |
| **Bottle** | 0.57-0.64 | 30-50 | 70-85 | |
| **Fibre/textile** | 0.64-0.75 | | 70-80 | |

Further, PET of the film grade may be of Super bright quality without any added TiO₂, and wherein the conductivity may be controlled with metal additives, for example selected from the list consisting of Mg, Li, Na, and Ca, or combinations thereof. PET of the bottle grade may be of Super bright quality without any added TiO₂, and wherein the Crystallinity and transparency may be regulated by additives, for example additives selected from the group consisting of DEG, IPA, CHDM, CHDA and other suitable comonomers, or combinations thereof. PET of the fibre or textile grade may include TiO₂, and may be characterised by having TiO₂ content of 0-2%, and a DEG content of 0.5-1.5%.

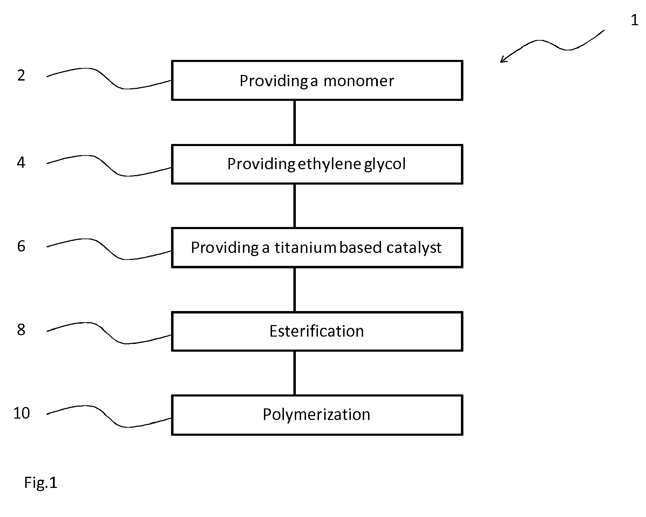

With reference to figure 1, an embodiment will now be described. Figure 1 schematically illustrates a method 1 for production of polyethylene terephthalate. The method 1 comprises the steps of, providing a terephthalic acid monomer 2; providing ethylene glycol 4; providing a titanium based catalyst 6; esterification 8 of a mixture of the monomer, ethylene glycol and titanium based catalyst in at least two steps, wherein the esterification temperature is in a range of 250°C to 280°C and increased, within the range, in each subsequent step; polymerisation 10 at a temperature in a range of 260°C to 290°C in at least two steps and is increased or kept constant, within the range, in each subsequent step to obtain the polyethylene terephthalate.

The titanium based catalyst may comprise Ti(OR)₄, wherein R may be any suitable organic compound such as alkyl, such as methyl, ethyl, propyl, or butyl, or an organic acid, such as citrate. For example the titanium based catalyst may be a catalyst commercially avaliable as CTL Ti638 or CTL Ti184 as obtained from CTLi England.

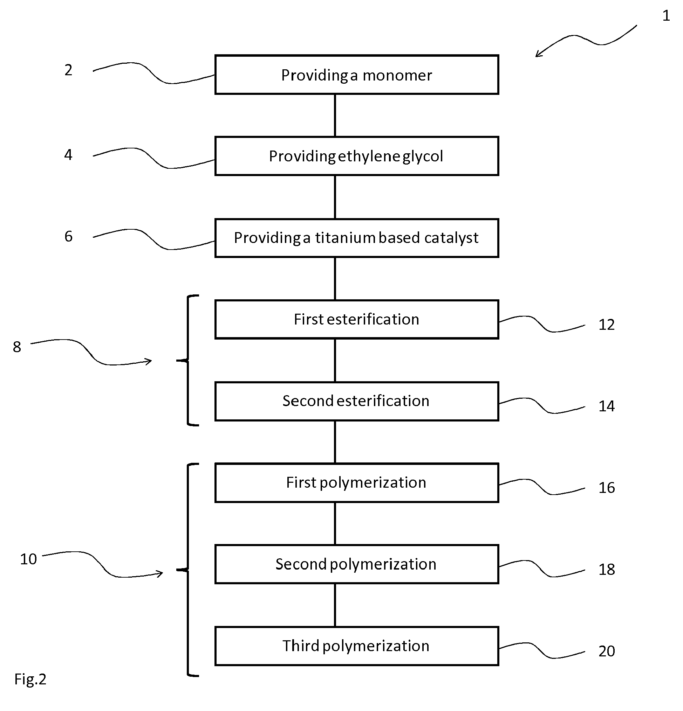

With reference to figure 2, another embodiment will now be discussed. Figure 2 schematically illustrates a flow scheme of a system and a method 1 for production of polyethylene terephthalate . The method 1 comprises the steps of, providing a terephthalic acid monomer 2 ; providing ethylene glycol 4; and providing a titanium based catalyst 6. Thereafter, esterification 8 of a mixture of the monomer, ethylene glycol and titanium based catalyst is performed in a first esterification step 12 and a second esterification step 14, wherein the esterification temperature in the first step is in a range of 255°C to 270°C, preferably 257°C to 267°C, and in a second step is in a range of 259°C to 280°C, preferably 265°C to 275°C, wherein the esterification temperature is higher in the second step compared to the first step. Thereafter, polymerisation 10 is performed in a first polymerisation step 16, a second polymerisation step 18, and a third polymerisation step 20, wherein the polymerization temperature in the first step is in a range of 265°C to 280°C, in the second step is in a range of 275°C to 285°C, and in the third step is in a range of in a range of 280°C to 285°C, wherein the temperature is higher or constant in each consecutive step compared to a preceding step, to obtain the polyethylene terephthalate.

The esterification in the first step may be performed during a retention time of 180 to 300 minutes, and the esterification in the second step may be performed during a retention time of 80 to 110 minutes.

The polymerisation in the first step may be performed during a retention time of 60 to 90 minutes, the polymerisation in the second step may be performed during a retention time of 60 to 90 minutes, and, optionally, the polymerisation in the third step may be performed during a retention time of 60 to 90 minutes.

In the esterification, Bis(2-Hydroxyethyl) terephthalate may be produced.

The titanium based catalyst may be provided prior to the esterification, or as an alternative prior to the polymerisation and after esterification has been initiated. For example, the titanium based catalyst may be added after esterification and before polymerisation.

The process may results in a PET production of one ton or above per 24 hours. The PET production may be 10 tonnes or above per 24 hours, such as 100 tonnes or above per 24 hours. For example, the PET production may be 10 to 500 tonnes per 24 hours, such as 100 to 300 tonnes per 24 hours.

The titanium based catalyst may comprise Ti(OR)₄, wherein R may be alkyl, such as butyl, or an organic acid, such as citrate.

R may be any suitable organic group.

### Experiments

A plurality of experiments according to embodiments have been conducted as discussed below. Some parameters, for example retention times, may vary between conducted experiments, and in such cases, the retention time is given as an interval comprising the different retention times.

In the experiments a Ti-based catalyst CTL Ti638 or a Ti-based catalyst CTL Ti184, both as obtained from Catalytic Technologies Limited, UK were used. Comparing experiments showed that they performed with similar results, and they were used interchangeably for the experiments.

### PET from terephthalic acid.

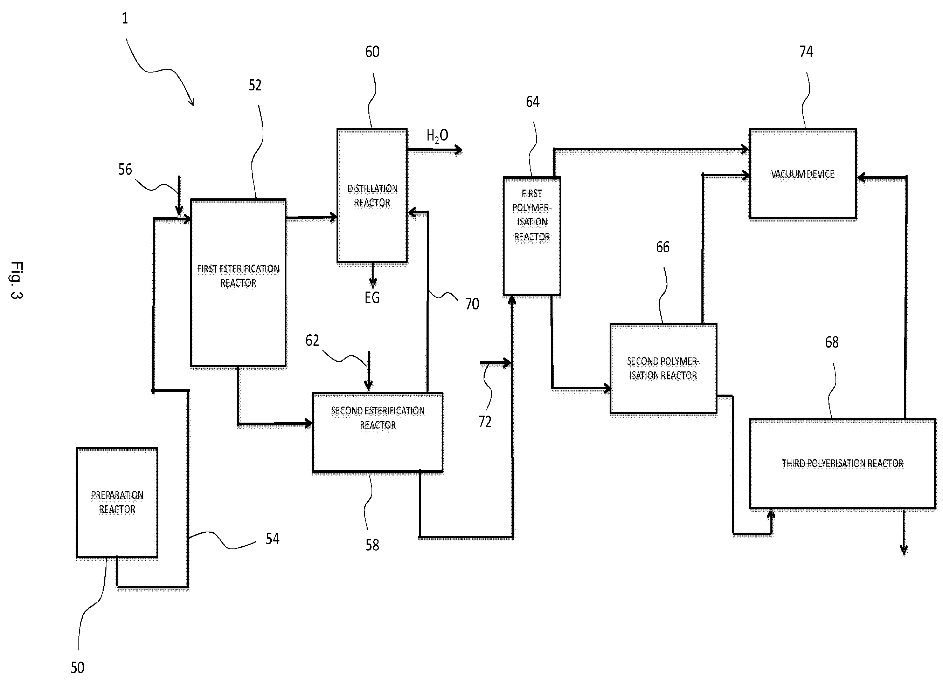

Polyethylene terephthalate was manufactured according to the below descriptions, and with reference to figure 3.

Terephthalic acid as purified terephthalic acid (PTA) and ethylene glycol (EG) were provided in a molar ratio of 2.0 or 2.4 as nominal value in a preparation tank 50 where it was mixed into a slurry and fed to a first esterification reactor 52 via pipings 54. Arrows of illustrated pipings 54 indicates a direction through which contents of the pipings are flowing. Although not performed for the present example, additives such as, for example, colouring agents or toners may, optionally, be introduced to the PTA upstream the first esterification reactor 52, such as by being introduced into the piping 54, or directly to the first esterification reactor 52, or downstream the first esterification reactor 52.

The catalyst, having a 5% by weight titanium content, was introduced to the slurry at a concentration of 0.017% by weight of the slurry, via pipings 54, as indicated by arrow 56. In the first esterification reactor 52, esterification took place by heating the slurry therein to a temperature between 260 and 264°C, for a retention time of 180 to 240 minutes (different retention times were used for different experiments). A vapour phase from the first esterification reactor 52 was removed and introduced to a distillation reactor 60, in which water and ethylene glycol (EG) were separated and removed from the distiller. This distillation is optional, but was conducted in order to improve efficiency of the PET production. The partially esterified mixture was transferred from the first esterification reactor 52 to a second esterification reactor 58, where esterification took place by heating to to a temperature between 267 and 271 °C, for a retention time of 80 to 110 minutes. To this second esterification reactor 58 ethylene glycol was added, as indicated by arrow 62. The added ethylene glycol may be fresh ethylene glycol or ethylene glycol from the distillation, or a mixture thereof.

From the second esterification reactor 58, a vapour phase was transferred to the distillation reactor 60 via piping 70, and the esterified mixture was introduced into a first polymerization reactor 64, by pipings. Via injection devices (not illustrated) of the pipings diethylene glycol was added in some of the experiments before the esterified mixture entered the first polymerisation reactor 64, as illustrated by arrow 72. In examples, 1.32% by weight of the final polymer was added of DEG. DEG provides for dye take up and for crystallinity control. In some experiments TiO₂ and phosphorous were also added. In examples, 0.3% by weight of the final polymer were added of TiO₂, and 15 ppm of phosphorous. The TiO₂ adds to properties of the final PET including a dulling effect. In the first polymerisation reactor 64, the polymerisation took place by heating the mixture therein to a temperature between 271 to 275°C, for a retention time of 60 to 90 minutes. From the first polymerisation reactor 64 the mixture was transferred to a second polymerisation reactor 66, in which polymerisation was continued at a temperature between 279 to 283°C, for a retention time of 60 to 90 minutes. From the second polymerisation reactor 66, the mixture was transferred to a third polymerisation reactor 68, in which finishing polymerisation was continued at a temperature between 282 to 284°C, for a retention time of 60 to 90 minutes. The first, second, and/or third polymerisation reactors 64,66,68 may, optionally, be connected to an optional vacuum device 74, for removal of compounds from the polymerisation reactors.

The thus obtained PET was characterised in laboratory tests according to table 2 and the results are given in table 3. The PET was free from toxic or otherwise undesired metals.

**Table 2: Used characterisation methods.**

| | |
|---|---|
| IV | ASTM D4603 |
| L,ab color | hunterlab ASTM E313 |
| DSC analysis | ISO 11357 |
| COOH content | ASTM D7409 |
| Metals | ASTM F2617-08 |
| SMR | ASTM D257 |
| DEG | Aminolysis and GC method |
| Metals | XRF method |

**Table 3: Laboratory results from PET produced from terephthalic acid.**

| | UNIT | NOMINAL VALUE | CONTROL LIMIT | DISPO LIMIT |
|---|---|---|---|---|
| **IV** | dL/g | 0,620 | ± 0,005 | ± 0,010 |
| **L COLOR** | - | 60,0 | ± 1 | ± 2 |
| **a COLOR** | - | -3,00 | ± 0,25 | ± 0,50 |
| **b COLOR** | - | 8,0 | ± 0,5 | ± 1 |
| **COOH** | Eq/Ton | max.35 | - | - |
| **DEG** | % | 1,25 | ± 0,10 | ± 0,15 |
| **TiO2** | % | 0,3 | - | - |
| **Sb** | ppm | - | - | - |

It is evident from table 3 that the PET produced in the experiments and according to embodiments have desirable properties. For bottle or film grade PET, TiO₂ and DEG additions during production may be omitted. The PET is suitable for, for example, bottle and film production, for a plurality of reasons including the IV and the carboxylic acid content of below 35 eq/ton.

### Bottle and film grade grade PET production

Table 4 illustrates PET produced according to the experiments, which PET is suitable for, for example, PET-film manufacturing.

**Table 4: Properties of PET produced according to an embodiment.**

| **Properties** | **Specification** |
|---|---|
| B-1. INTRINSIC VISCOSITY (dL/GR) | 0.627 ± 0.013 |
| B-2. "b" COLOUR (HUNTER LAB XE) | 5.5 ± 2.0 |
| B-3. "a" COLOUR (HUNTER LAB XE) | -2.0 ± 1.0 |
| B-4. "L" COLOUR (HUNTER LAB XE) | 62.0 ± 3.0 |
| B-5. CHIP SIZE (GR/100 CHIPS) | 4.50 ± 0.50 |
| B-6. DEG CONTENT (WT %) | 1.15 ± 0.10 |
| B-7. COOH END GROUPS (EQ/TON) | MAX. 35.0 |
| B-8. HUMIDITY (WT %) | MAX. 0.10 |
| B-10. S. TYPICAL SMR (10⁷ OHMS.CM) | 17.0 ± 3.0 |

Table 5 illustrates PET produced according to the experiments, which PET is suitable for, for example, PET-film manufacturing.

**Table 5: Properties of PET produced according to an embodiment.**

| **Properties** | **Specification** |
|---|---|
| B-1. INTRINSIC VISCOSITY (dL/GR) | 0.620 ± 0.010 |
| B-2. "L" COLOUR (HUNTER LAB XE) | 58.0 ± 2.0 |
| B-3. "b" COLOUR (HUNTER LAB XE) | 3.5 ± 1.0 |
| B-4. CHIP SIZE (GR/100 CHIPS) | 2.5 ± 0.25 |
| B-5. DEG CONTENT (WT %) | 1.0 ± 0.10 |
| B-6. COOH END GROUPS (EQ/TON) | 40±5 |

### Staple fibre production

Staple fibres were produced from the PET produced from terephthalic acid according to the above experiments with reference to figure 3. The staple fibres were produced in two steps. In a first step, a staple fibre-spinning machine was connected to the polymerization line by a polymer transfer line. Undrawn fibres were produced with a standard fibre production line followed by drawing using a drawing machine.

Table 6 illustrates difference between the staple fibres according to embodiments and staple fibres outside the scope of the invention, illustrating benefits with the present invention.

**Table 6: Properties of staple fibres produced with PET according to embodiments and stable fibres produced from PET outside the scope of the invention using an antimony catalyst.**

| | Embodiments | Outside scope |
|---|---|---|
| **Denier** | 1.5 | 1.5 |
| **Tenacity (g/den)** | 5.59 | 5.17 |
| **Elongation (%)** | 38.7 | 39.2 |
| **Shrinkage (%)** | 6.31 | 6.5 |
| **L colour (-)** | 92.43 | 93.3 |
| **a colour (-)** | -1.64 | -0.8 |
| **b colour (-)** | 3.56 | 1.7 |
| **Oligomer** | 147 | 341 |
| **COOH (Eg/ton)** | 17.1 | 30.4 |

## Claims

1. Process for production of polyethylene terephthalate comprising the steps of,
providing a terephthalic acid monomer,
providing ethylene glycol;
providing a titanium based catalyst;
esterification of a mixture of the monomer, ethylene glycol and titanium based catalyst in at least two steps, wherein the esterification temperature is in a range of 250°C to 280°C and increased, within the range, in each subsequent step;
polymerisation at a temperature in a range of 260°C to 290°C in at least two steps and is increased or kept constant, within the range, in each subsequent step to obtain the polyethylene terephthalate.

2. The process according to claim 1, wherein the titanium based catalyst is selected from the group Ti(OR)₄, wherein R is an organic compound; organic acid alkaline metal titanum salts; and titanium alkylphosphate complexes; and any combination thereof.

3. The process according to claim 1 or 2, wherein the esterification temperature in a first step is in a range of 255°C to 270°C, preferably 257°C to 267°C and in a second step is in a range of 259°C to 280°C, preferably 265°C to 275°C.

4. The process according to anyone of claims 1 to 3, wherein the polymerization temperature in a first step is in a range of 265°C to 280°C, and in a second step is in a range of 275°C to 285°C.

5. The process according to anyone of the previous claims, comprising polymerization in a third step at a temperature in a range of 280°C to 285°C.

6. The process according to anyone of the previous claims, wherein
the esterification in the first step is performed during a retention time of 180 to 300 minutes, and
the esterification in the second step is performed during a retention time of 80 to 110 minutes.

7. The process according to anyone of the previous claims, wherein
the polymerisation in the first step is performed during a retention time of 60 to 90 minutes,
the polymerisation in the second step is performed during a retention time of 60 to 90 minutes, and, optionally,
the polymerisation in the third step is performed during a retention time of 60 to 90 minutes.

8. The process according to anyone of the previous claims further comprising addition of additives chosen from colouring agents, fillers, dulling agents, stabilizers, anti-crystallisation agents, pinning agents, preferably chosen from calcium carbonate, barium sulphate, titanium dioxide, phosphorous, phosphoric acid, polyphosphoric acid, phosphates, isophtalic acid, diethylene glycol, cyclohexanedicarboxylic acid (CHDA), cyclohexanedimethanol (CHDM), magnesium, lithium and sodium, or combinations thereof.

9. The process according to anyone of the previous claims, wherein diethylene glycol is added before the polymerisation.

10. The process according to anyone of the previous claims, wherein the process further comprises manufacturing of polyethylene terephthalate chips or fibres comprising the polyethylene terephthalate obtained from the polymerisation.

11. The process according to claim 10, wherein the polyethylene terephthalate chips are of film grade, bottle grade, or textile grade.

12. The process according to anyone of the previous claims further comprising addition of ethylene glycol to an esterification step.

13. The process according to anyone of the previous claims, further comprising an ethylene glycol separation step, wherein a gaseous stream from at least one of the esterification steps is subjected to a distillation to recover ethylene glycol, and optionally recycling the recovered ethylene glycol to an esterification step and/or optionally recycling the recovered ethylene glycol via a filtering media in which activated carbon is present.

14. The process according to anyone of the previous claims, wherein
the esterification temperature in a first step is in a range of 260°C to 264°C, and in a second step is in a range of 267°C to 271 °C,
the polymerization temperature in a first step is in a range of 271 °C to 275°C, and in a second step is in a range of 279°C to 283°C, and
optionally, the polymerisation in a third step at a temperature in a range of 282°C to 284°C.

15. A polyethylene terephthalate chip, **characterised by** having
an intrinsic viscosity of at least 0.6 to 0.75,
a content of -COOH of 50 Eq/ton or below, and
a content of diethylene glycol of 2% by weight or below.

16. A polyethylene terephthalate product obtainable according to the process according to anyone of claims 1 to 15.

17. A film, fibre, or bottle comprising the polyethylene terephthalate product according to claim 16.
